**Europäisches Patentamt**

**European Patent Office**

**Office européen des brevets**

(19)

(11) Veröffentlichungsnummer : **0 407 843 B1**

(12)

# EUROPÄISCHE PATENTSCHRIFT

(45) Veröffentlichungstag der Patentschrift :
**02.09.92 Patentblatt 92/36**

(51) Int. Cl.⁵ : **F02F 11/00**, F16J 15/08

(21) Anmeldenummer : **90112530.2**

(22) Anmeldetag : **30.06.90**

(54) **Zylinderkopfdichtung für Hubkolbenmaschinen, insbesondere Brennkraftmaschinen.**

(30) Priorität : **12.07.89 DE 3922885**

(43) Veröffentlichungstag der Anmeldung :
**16.01.91 Patentblatt 91/03**

(45) Bekanntmachung des Hinweises auf die
Patenterteilung :
**02.09.92 Patentblatt 92/36**

(84) Benannte Vertragsstaaten :
**DE FR GB IT SE**

(56) Entgegenhaltungen :
**DE-B- 1 206 656
FR-A- 2 596 458
US-A- 4 474 147**

(73) Patentinhaber : **MAN Nutzfahrzeuge
Aktiengesellschaft
Dachauer Strasse 667 Postfach 50 06 20
W-8000 München 50 (DE)**

(72) Erfinder : **Kubis, Heribert, Dipl.-Ing.
Heisterstrasse 37
W-8500 Nürnberg (DE)**
Erfinder : **Winter, Josef, Ing.(grad.)
Lerchenweg 17b
W-8540 Rednitzhembach (DE)**

EP 0 407 843 B1

**Beschreibung**

Die Erfindung bezieht sich auf eine Zylinderkopfdichtung für Hubkolbenmaschinen, insbesondere Brennkraftmaschinen, vorzugsweise solche mit Zylinderlaufbüchsen, wobei die Zylinderlaufbüchse an ihrem einem Zylinderkopf zugewandten Ende einen Bund mit einer Zentrierung aufweist sowie zusätzlich einen zur Zylinderlaufbüchse konzentrischen kreisförmigen Steg aufweist, und der Zylinderkopf diesem Steg konzentrisch gegenüberliegend eine kreisförmige Nut besitzt und die aus vorzugsweise metallischem Werkstoff bestehende Dichtung konstanter Dicke beim Anziehen von Zylinderkopfschrauben durch plastische Verformung in den Steg und in die Nut eindringt.

Aus DE-OS 37 27 598 ist eine Zylinderkopfdichtung für nasse Zylinderlaufbüchsen bekannt, bei der eine metallische Dichtung konstanter Dicke zwischen einem Bund der Zylinderlaufbüchse und einem Zylinderkopf angeordnet ist. Der Bund weist einen ringförmigen, erhabenen Steg und der Zylinderkopf eine, diesem Steg gegenüberliegende und zu diesem konzentrische Nut auf. Beim Anzug von Zylinderkopfschrauben dringt der Steg in die Dichtung und die Dichtung wiederum durch plastische Verformung in die Nut ein. Die Dichtung ist auf dem Bund der Zylinderlaufbüchse mit einer in den Dichtring eingestochenen Nut gegenüber dem erhabenen Steg der Zylinderlaufbüchse zentriert. Eine derartige Dichtung ist wegen des erhöhten Fertigungsaufwandes für die Herstellung der Nut zu teuer.

Aus FR-PS 25 96 458 ist eine Dichtunng für Zylinderköpfe bekannt, die aus einem Ring mit rechteckigem Querschnitt gebildet wird. Die Zylinderlaufbüchse weist an ihrem, dem Zylinderkopf zugewandten Ende einen Bund mit Feuerschutzkragen auf. Der Bund ist mit einem konzentrischen Steg versehen, welcher beim Anziehen von Zylinderkopfschrauben durch plastische Verformung in den Ring eindringt. Die plastische Verformung wird durch Anlage des Zylinderkopfes an der Restflächendichtung des Ringes begrenzt. Zwischen diesem Ring und dem Feuerschutzbund ist ein Spiel vorgesehen, um dem Ring beim Anziehen der Zylinderkopfschrauben eine radiale Dehnung zu erlauben, ohne daß durch deren Behinderung durch Anlage am Feuerschutzkragen eine unzulässige Verformung der Lauffläche der Zylinderlaufbüchse eintritt. Durch diese Art der Dichtung wird zwar die Standzeit der Dichtung erhöht, jedoch bereitet die erforderliche Zentrierung des Rings bei der Montage in der Massenfertigung Probleme, da das Spiel zwischen Ring und Feuerschutzkragen zu groß bemessen werden muß.

Ausgehend von einer Dichtung gemäß dem Gattungsbegriff liegt der Erfindung die Aufgabe zugrunde, die Dichtung so weiterzuentwickeln, daß sie ohne zusätzlichen Fertigungsaufwand zentrierbar ist, ohne daß eine unzulässige Rückwirkung auf die Zylinderlaufbüchse zu befürchten ist.

Erfindungsgemäß wird diese Aufgabe nach den kennzeichnenden Merkmalen des Ansprüches 1 gelöst.

Durch die gezielte Abstimmung der beiden Stirnflächen der Dichtung zur Fläche des Steges bzw. der Nut ist es möglich, daß trotz plastischer Verformung im Bereich des Steges die Durchmesseränderung des Ringes infolge der Quetschung der Dichtung so klein bleibt, daß keine nenneswerte Verformung im Bereich der Zentrierung der Zylinderlaufbüchse zu befürchten ist, mit anderen Worten, zwischen Dichtung und der Zentrierung der Zylinderlaufbüchse braucht lediglich ein minimaler Zwischenraum entsprechend einer Spielpassung vorhanden zu sein. Damit kann die Dichtung genau zentriert werden.

Eine vorteilhafte Weiterbildung der Erfindung kann den Unteransprüchen 2 bis 4 entnommen werden.

Durch diese Maßnahmen wird sowohl eine Dichtung gegen Kühlmittel und Öl erreicht, als auch ein Austritt von Verbrennungs-Leckgasen in den Kühlwasserkreislauf vermieden, indem die Leckgase über Ringspalte ins Freie abgeführt werden.

Ein Ausführungsbeispiel der Erfindung ist in Zeichnungen dargestellt. Es zeigt:

Figur 1 eine Zylinderkopfdichtung im eingebauten Zustand ohne Verspannung

Figur 2 eine Zylinderkopfdichtung im eingebauten Zustand unter Spannung nach dem Anzug von Zylinderkopfschrauben.

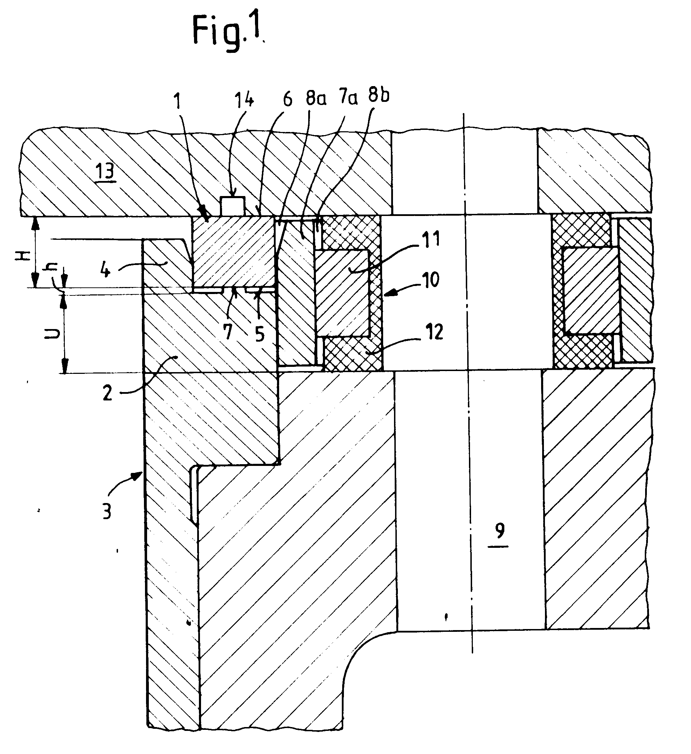

Figur 1 zeigt eine Dichtung welche als Ring 1 ausgebildet ist. Dieser Ring 1 wird in einen Bund 2 einer Zylinderlaufbüchse 3 eingelegt. Zum koaxialen Einbau in die Zylinderlaufbüchse 3 ist eine Zentrierung 4 vorgesehen. Der Ring 1 wird mit unbearbeiteten oder z. B. durch Planschleifen oder Drehen spangebend bearbeiteten oberen und unterend Stirnfläche 5 und 6 ausgeführt. Die Höhe des Ringes 1 beträgt im unbelasteten Zustand H. Da der Ring 1 ein Rechteckprofil aufweist läßt sich die Höhe H mit geringer Toleranz herstellen. Der Bund 2 weist einen ringförmigen Steg 7 mit der Höhe h auf.

Konzentrisch um den Ring 1 liegt eine Restflächendichtung 7a, wobei die Zylinderlaufbüchse 3 einen Überstand U über den Grund der Restflächendichtung aufweist. Diese weist Ringspalten 8a und 8b zur Abführung des Leckgases auf, welches den Ring 1 passieren konnte. Die Restflächendichtung 7a wird von Bohrungen 9 für Zylinderkopfschrauben durchdrungen. Zur Abdichtung gegen Kühlwasser und Öl sind die Bohrungen 9 von Dichtungen 10 umgeben, welche ihrerseits aus einem Metallträger 11 bestehen, auf den eine Elastomerauflage 12 aufvulkanisiert ist. Eine bearbeitete Auflageflächen des Zylinderkopfes 13 ist mit einer ringförmigen Nut 14

2

versehen, die dem Steg 7 gegenüberliegend und zu diesem konzentrisch angeordnet ist.

Erfindungsgemäß liegt zwischen der Fläche des Steg 7 mit dem Wert $A_3$ und der um die Ringfläche der Nut 14 reduzierten zweiten Stirnfläche 6 mit dem Wert $A_2$ ein konkretes Flächenverhältnis $A_3 = 0,5\,A_2$ vor.

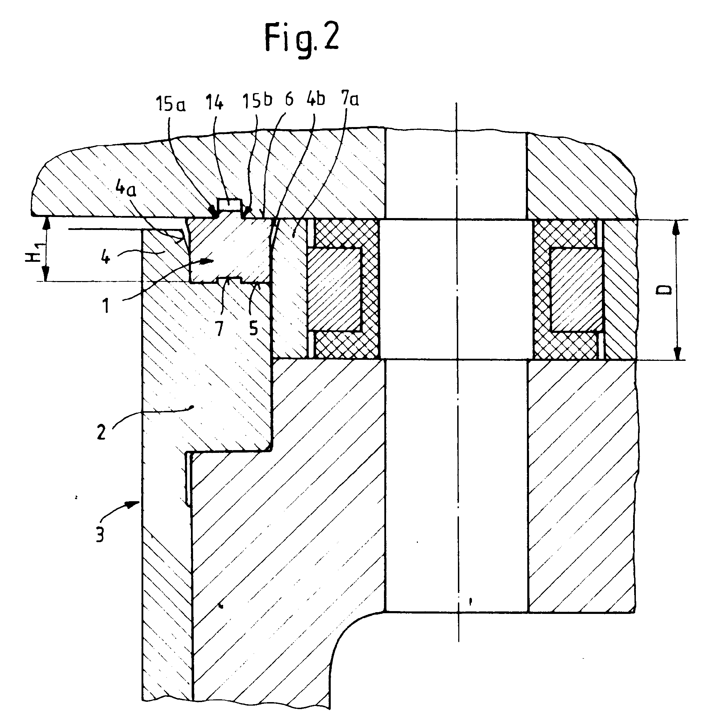

Beim Festziehen der nicht dargestellten Zylinderkopfschrauben dringt, wie in Figur 2 dargestellt, der Steg 7 unter plastischer Verformung des Ringes 1 in diesen ein. Die plastische Verformung kommt zum Stillstand, wenn die um die Fläche des Steges 7 reduzierte erste Stirnfläche 5 auf dem Bund 2 zur Auflage kommt.

Nach dem ganzflächigen Aufliegen dem Ringes 1 auf dem Bund 2 der Zylinderlaufbüchse 3 beträgt das Verhältnis der ersten Stirnfläche 5 mit einem Wert $A_1$ zu der um die Ringfläche der Nut 14 reduzierten Stirnfläche 6 mit dem Wert $A_2$

$$\frac{A_1}{A_2} = \frac{3}{2}$$

Bei weiterer Fließverformung des Ringes 1 durch Anzug der Zylinderkopfschrauben wird nur noch der, der Nut 14 naheliegende Teil der zweiten Ringfläche 6 plastisch deformiert, so wie es in Figur 2 dargestellt ist. Dabei dringen Kanten 15a und 15b der Nut 14 in die zweite Ringfläche 6 ein, bis durch Auflage des Zylinderkopfes 13 auf der Restflächendichtung 7a die plastische Verformung insgesamt ihren Abschluß findet. Um die in diesem Bereich auftretende Quetschung nicht zu behindern, weisen die Zentrierung 4 und die Restflächendichtung 7a Anfassungen 4a bzw. 4b auf.

Durch die erfindungsgemäße Abstimmung der Flächen $A_1$, $A_2$ und $A_3$ aufeinander wird die seitliche Deformation des Ringes 1 im Bereich dessen Auflage auf dem Bund 2 der Zylinderlaufbüchse so gering gehalten, daß der Ring 1 beim Einbau an der Zentrierung mit einer Spielpassung anliegen kann, ohne daß eine Verformung der Zylinderlaufbüchse 3 im Bereich der Zentrierung 4 zu befürchten wäre.

Es versteht sich von selbst, daß die Zentrierung des Ringes 1 nicht nur an der Zentrierung 4, sondern auch an einer Innenfläche der Restflächendichtung 7a erfolgen kann, wobei die Zentrierung der Restflächendichtung 7a wiederum am Bund 2 der Zylinderlaufbüchse 3 oder durch nicht dargestellte Paßelemente bewerkstelligt wird.

Durch die Höhe H1 des Ringes 1 nach der plastischen Verformung ist durch die Höhe D der Restflächendichtung 7a und dem Büchsenüberstand U der Zylinderlaufbüchse 3 so festgelegt, daß die Dichtung den inneren Verformungen des Zylinderkopfs 13 durch die pulsierende Zündkraft elastisch folgen kann.

## Patentansprüche

1. Zylinderkopfdichtung für Hubkolbenmaschinen, insbesondere Brennkraftmaschinen, vorzugsweise solche mit Zylinderlaufbüchsen (3), wobei die Zylinderlaufbüchse an ihrem einem Zylinderkopf (13) zugewandten Ende einen Bund (2) mit einer Zentrierung (4) aufweist sowie zusätzlich einen zur Zylinderlaufbüchse (3) konzentrischen kreisringförmigen Steg (7) aufweist, und der Zylinderkopf (13) diesem Steg (7) konzentrisch gegenüberliegend eine kreisringförmige Nut (14) besitzt und ein aus vorzugsweise metallischem Werkstoff bestehender Ring (1) der Dichtung mit rechteckförmigen Querschnitt und konstanter Dicke beim Anziehen von Zylinderkopfschrauben durch plastische Verformung in die Nut (14) und der Steg (7) in den Ring (1) der Dichtung eindringt, dadurch gekennzeichnet, daß der Ring (1) mit einer Spielpassung an der Zentrierung (4) anliegt, daß eine Stirnfläche (5,6) des Ringes (1) mit dem Wert $A_1$ ins Verhältnis gesetzt zu einer um die Ringfläche der Nut (14) reduzierten Stirnfläche (5,6) mit dem Wert $A_2$ ein Verhältnis $\frac{A_1}{A_2} = \frac{3}{2}$ aufweist, und daß eine Ringfläche des Stegs (7) mit dem Wert $A_3$ ins Verhältnis gesetzt zu der um die Ringfläche der Nut (14) reduzierten Stirnfläche (5,6) mit dem Wert $A_2$ ein Verhältnis $\frac{A_3}{A_2} = \frac{1}{2}$ aufweist.

2. Zylinderkopfdichtung nach Anspruch 1, dadurch gekennzeichnet, daß konzentrisch um den Ring (1) eine Restflächendichtung (7a) angeordnet ist die vorzugsweise aus Metallblech besteht, wobei die Restflächendichtung (7a) Bohrungen (9) zur Durchführung von Zylinderkopfschrauben und zur Aufnahme von Dichtungen (10) aufweist, und daß die Dichtungen (10) aus Metallträgern (11) mit aufvulkanisierten Elastomerauflagen (12) gebildet werden.

3. Zylinderkopfdichtung nach Anspruch 2, dadurch gekennzeichnet, daß die Restflächendichtung Leckgasabführungen in Form von Ringspalten (8a, 8b) aufweist.

**4.** Zylinderkopfdichtung nach den Ansprüchen 1 bis 3, dadurch gekennzeichnet, daß eine Höhe H1 des Ringes (1) so bemessen ist, daß diese den inneren Verformungen eines Zylinderkopfes (13) durch eine pulsierende Zündkraft elastisch folgen kann.

**Claims**

**1.** A cylinder head gasket for piston engines, in particular internal combustion engines, preferably those with cylinder liners (3), the cylinder liner having at its end facing a cylinder head (13) a collar (2) with a centring means (4), and additionally having an annular web (7) concentric with the cylinder liner (3), and the cylinder head (13) having, concentrically opposite this web (7), an annular groove (14), and a ring (1), preferably of metal material, of the gasket with a rectangular cross-section and constant thickness penetrating into the groove (14) and the web (7) penetrating into the ring (1) of the gasket by plastic deformation when the cylinder head screws are tightened, characterized in that the ring (1) bears against the centring means (4) with a loose fit, in that an end face (5,6) of the ring (1) with the value $A_1$ has, in relation to an end face (5,6) reduced by the annular surface of the groove (14) with the value $A_2$, the ratio

$$\frac{A_1}{A_2} = \frac{3}{2}$$

and in that an annular surface of the web (7) with the value $A_3$ has, in relation to the end face (5, 6) reduced by the annular surface of the groove (14) with the value $A_2$, a ratio

$$\frac{A_3}{A_2} = \frac{1}{2}$$

**2.** A cylinder head gasket according to Claim 1, characterized in that a remaining surface gasket (7a) which is preferably of sheet metal is arranged concentrically around the ring (1), the remaining surface gasket (7a) having bores (9) for the guiding therethrough of cylinder head screws and the receiving of gaskets (10), and in that the gaskets (10) are formed from metal carriers (11) with elastomer layers (12) vulcanized thereon.

**3.** A cylinder head gasket according to Claim 2, characterized in that the remaining surface gasket has leakage gas removal lines in the form of annular gaps (8a, 8b).

**4.** A cylinder head gasket according to Claims 1 to 3, characterized in that a height H1 of the ring (1) is dimensioned such that it can elastically follow the internal deformations of a cylinder head (13) caused by a pulsating ignition force.

**Revendications**

1) Dispositif d'étanchéité de culasse de moteur à piston alternatif, notamment de moteur à combustion interne de préférence équipé de chemise de cylindre (3), la chemise ayant à son extrémité tournée vers la culasse (13), un collet (2) avec un organe de centrage (4) et en outre, une nervure circulaire (7) concentrique à la chemise (3) et la culasse (13) comporte concentriquement à cette nervure (7), une rainure circulaire (14), ainsi qu'un anneau (1) en un matériau de préférence métallique formant le joint de section rectangulaire et d'épaisseur constante et qui lors du serrage des vis de la culasse, pénètre dans la rainure (14) et fait pénétrer la nervure (7) dans l'anneau (1) par déformation plastique, dispositif caractérisé en ce que l'anneau (1) s'applique avec une adaptation de jeu contre l'organe de centrage (4), en ce que une surface frontale (5, 6) de l'anneau (1) ayant la valeur $A_1$ par rapport à la surface frontale (5, 6) réduite de valeur $A_2$ autour de la surface annulaire de la rainure (14) comporte le rapport

$$\frac{A_1}{A_2} = \frac{3}{2}$$

et en ce qu'une surface annulaire de la nervure (7) de valeur $A_3$ est en rapport avec la surface frontale réduite (5, 6) de valeur $A_2$ autour de la surface annulaire de la rainure (14) suivant le rapport

$$\frac{A_3}{A_2} = \frac{1}{2}$$

2) Dispositif d'étanchéité de culasse selon la revendication 1, caractérisé en ce qu'un joint de surface résiduelle (7a) est prévu autour de l'anneau 1, de préférence en tôle métallique et ce joint de surface résiduelle (7a) comporte des perçages (9) pour la passage des vis de culasse et pour recevoir des joints (10) et en ce que les joints (10) sont constitués de supports métalliques (11) sur lesquels sont vulcanisées des applications en élastomère (12).

3) Dispositif d'étanchéité de culasse selon la revendication 2, caractérisé en ce que le joint de surface résiduelle comporte des évacuations de gaz d'échappement de fuite en forme d'intervalles annulaires (8a, 8b).

4) Dispositif d'étanchéité de culasse selon les revendications 1 à 3, caractérisé en ce que la hauteur H1 de l'anneau (1) est dimensionnée pour suivre élastiquement les déformations internes d'une culasse (13) sous l'effet de la force d'allumage impulsionnelle.

# Fig.1

# Fig. 2